Europäisches Patentamt

European Patent Office

Office européen des brevets

(19)

(11) **EP 1 152 235 A1**

(12) **EUROPEAN PATENT APPLICATION**

(43) Date of publication:
**07.11.2001 Bulletin 2001/45**

(51) Int Cl.7: **G01N 17/02**

(21) Application number: **00870093.2**

(22) Date of filing: **04.05.2000**

(84) Designated Contracting States:
**AT BE CH CY DE DK ES FI FR GB GR IE IT LI LU MC NL PT SE**
Designated Extension States:
**AL LT LV MK RO SI**

(71) Applicant: **Ionpro N.V.**
**3001 Heverlee (BE)**

(72) Inventors:
- **Pierre, Christian**
  **1030 Brussels (BE)**
- **Verbeke, Peter**
  **3020 Herent (BE)**

(74) Representative: **Van Malderen, Michel et al**
**Office van Malderen**
**Place Reine Fabiola 6/1**
**1083 Bruxelles (BE)**

(54) **System to measure the state of corrosion of buried metallic structures continuously in time and in length**

(57) The present invention is related to a system for measuring the state of corrosion of a buried metallic structure, such as a pipe line, characterized in that said measurement system allows said corrosion measurement simultaneously and continuously in time on several locations of said buried structure. The measurement system comprises a measuring cable (1), itself comprising several current electrodes (2) and several measuring electrodes (3), several addressable switching devices (20) and an electrical bus (6), a reference electrode (5) and a control system (4) comprising an embedded controller (8), an interface board (9) and a measurement board (7), wherein said measurement board (7) comprises an AC and/or DC voltage generator (50) and a voltage measurement device (51). The present invention is also related to the use of said measurement system for various corrosion measurements and for a number of applications not related to corrosion.

FIG. 1

**Description**

**Field of the invention**

The present invention is related to a measurement system that allows determining the state of corrosion of buried metallic structures at every location and at every moment during their lifetime. The same measurement system can be used for other applications than corrosion.

**State of the art**

In most countries it is imposed by law to protect buried metal structures of strategic importance, like pipelines and tanks, not only with a passive corrosion protection in the form of a coating, but also with a system of active cathodic or anodic corrosion protection, whereby a current flows through the soil towards the structure that needs to be protected.

In recent years, big efforts have been made by specialized engineering firms in order to analyze the state of corrosion, to provide solutions for corrosion protection and to establish techniques that allow to determine the level of protection that is achieved by both the passive and the active corrosion protection.

However, given the fact that these structures are buried in the ground, it is very difficult, costly and time consuming to exactly locate the defaults and to carry out the tests at regular time intervals. Very often specialized staff still manually carry out these surveys. This way, millions of kilometres have to be examined every six to twelve months. As a consequence, the follow-up is not sufficient and problems are not detected early enough.

Document EP-A-560443 describes a method for detecting corrosion of buried structures subjected to cathodic protection by applying local sinusoidal wave excitation currents of different frequencies to the structure and measuring the corresponding voltage responses. This is however a method that provides only local information, and it has to be repeated at different locations along the length of the buried structure, which makes it a time-consuming effort to obtain overall corrosion data.

**Aims of the invention**

The aim of the measurement system according to the present invention is to measure continuously or at regular time intervals the state of corrosion of a buried structure at a given number of locations, along important portions of the structure, preferably along the entire length of the structure.

A further aim is to assure a quick and precise measurement of the state of corrosion at every location while avoiding measurement errors, wrong interpretation of data and calculation errors made by the technicians in charge.

**Summary of the invention**

The present invention is related to a measuring system for the measurement of the corrosion of a buried metallic structure and which allows said corrosion measurement simultaneously and continuously in time on several locations of said buried structure.

In a preferred embodiment of the invention, the measurement system of the invention comprises :

- a measuring cable comprising several current electrodes and several measuring electrodes, several addressable switching devices and an electrical bus,
- a reference electrode,
- a control system, preferably comprising an embedded controller, an interface board and a measurement board, wherein said measurement board comprises an AC and/or DC voltage generator and a voltage measurement device.

In the preferred embodiment of the measurement system according to the invention, said electrodes are arranged in pairs of one current electrode and one measuring electrode along the length of said cable, each pair being located on a different location along said cable, so that all of said electrodes are in contact with the surrounding soil, one reference electrode is situated at the beginning of said cable, and one addressable switching device is present at each of said locations, said addressable switching device controlling the connection of said current electrodes to said voltage generator, and said addressable switching device equally controlling the connection of said measuring electrodes to said voltage measurement device.

In the preferred embodiment of the measurement system according to the invention, said electrical bus comprises a connection to a zero volt reference, a voltage supply for the addressable switching devices, a transmit line for the addressable switching devices, a receive line for the addressable switching devices, two conducting wires used to supply or drain a current to or from said current electrodes, and one conducting wire used to measure a voltage between said buried structure and said measuring electrodes.

In the preferred embodiment of the measurement system according the invention, said addressable switching device is controlling the connection of said current electrode to one of said first two conducting wires, and said addressable switching device is equally controlling the connection of said measuring electrode to said conducting wire.

In the preferred embodiment of the measurement system according to the invention, said addressable switching devices comprise switching components selected from the group consisting of solid state relays, transistors, thyristors, fets and read relays.

In the preferred embodiment of the measuring system according to the invention, said embedded controller is a computer.

In the preferred embodiment of the present invention, said current electrodes are made of material having a low corrosion rate, preferably of Mix Metal Oxide (MMO), said measuring electrodes are made of a metal, preferably steel and said reference electrode is a solid state reference electrode.

In the preferred embodiment of the measurement system according to the present invention, said cable is supplied in a fabric containing at every sensor location a hydrophile powder.

In the preferred embodiment of the measurement system according to the present invention, all the electrodes may be switched on or off independently by said control system.

The present invention is equally related to the use of the measurement system according to the invention to localize coating defects of a coated buried metallic structure.

The present invention is equally related to the use of the measurement system according to the invention to measure an average resistance of a coating of a buried structure.

The present invention is equally related to the use of the measurement system according to the invention to measure a local resistance of a coating of a buried structure.

The present invention is equally related to the use of the measurement system according to the invention to measure a local corrosion rate of a buried structure.

The present invention is equally related to the use of the measurement system according to the invention to measure a soil resistivity.

The present invention is equally related to the use of the measurement system according to the invention to measure corrosion potentials in the absence or presence of interference currents.

The present invention is equally related to the use of the measurement system according to the invention to measure a level of protection provided by a cathodic protection installation and to the use of adjusting said protection level in the absence or presence of interference currents.

The present invention is equally related to the use of the measurement system according to the invention as an intelligent anode.

The present invention is equally related to the use of the measurement system according to the invention to localize hydrocarbon contamination in the ground.

The present invention is equally related to the use of the measurement system according to the invention to continuously measure the humidity of a soil.

The present invention is equally related to the use of the measurement system according to the invention for rehabilitating a coating of buried structures.

The present invention is equally related to the use of the measurement system according to the invention for a controlled sanitation of soils polluted by heavy metals.

## Short description of the drawings

Figure 1 describes a schematic view of the corrosion measurement system according to the present invention.

Figure 2 explains the connection and function of the electrically conducting wires inside the measuring cable according to the invention.

Figure 3 represents the general principle of the addressable switching devices (ASD's) according to the invention.

Figure 4 illustrates the activation of current and measuring electrodes for detecting coating defects or measuring the coating resistance of a buried structure.

Figures 5a and 5b illustrate the measurement of the corrosion current $I_c$.

Figures 6a and 6b illustrate the measurement of the 4-point method for measuring soil resistivity with the system of the present invention.

Figure 7 illustrates the principle of corrosion potential measurements with the measurement system according to the present invention.

Figure 8 represents the typical percolation curve of resistivity as a function of water percentage for soil.

Figure 9 illustrates the application of the apparatus according to the present invention for in situ rehabilitation of damaged buried structures.

Figure 10 illustrates the application of the apparatus according to the present invention for heavy metal soil decontamination.

**Detailed description of the invention**

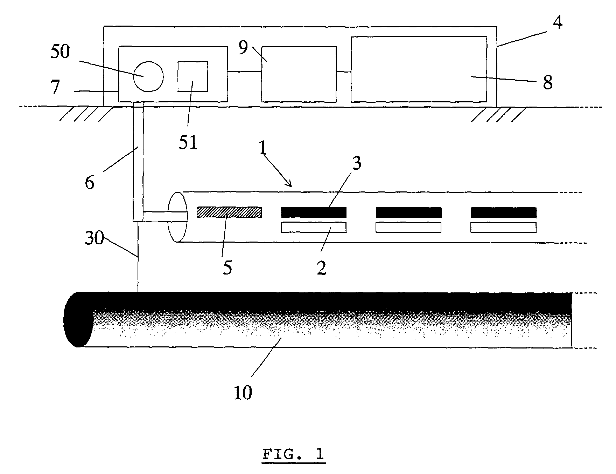

Figure 1 describes the measurement system according to the invention, consisting of a cable 1 onto which a number of electrodes are attached, on several measurement locations. The cable 1 is buried in the vicinity of a buried metallic structure 10, such as a pipeline. For short term measurements, the cable can also be laid on the ground above the metallic structure 10.

At each measurement location, a current electrode 2 and a measuring electrode 3 are attached to the cable, so that they are in contact with the soil surrounding the cable. Inside the cable 1, a 7-wire electrical bus 6 with small diameter links the several locations together as well as linking all of these locations to an automatic control system 4, situated above the ground, and consisting of one measurement board 7, driven by an embedded controller 8 through a computer communication interface board 9.

At every location, inside the cable 1, are interrupters, also called ASD's or Addressable Switching Devices (not shown on figure 1), which are integrated in the cable and which are remotely activated from the measurement board 7. One reference electrode 5 is present on one location of the cable. Integrated in the cable 1 is the bus 6 and one connection 30 to the metallic structure. By activating one ore more of the current electrodes, a current (AC or DC), generated by a source 50 which is located on the measurement board 7, can be sent through the soil to the metallic structure. A current can equally be sent by one current electrode and picked up by another current electrode. The measuring electrodes allow the measurement of corrosion potentials, via a voltage measurement device 51, located on the measurement board 7, and the subsequent calculation of the severity and size of coating defects. The reference electrode 5 allows to measure the absolute corrosion potential at its specific location. This measurement can be used to calibrate the measuring electrodes so that the absolute corrosion potential at all measuring locations can be monitored.

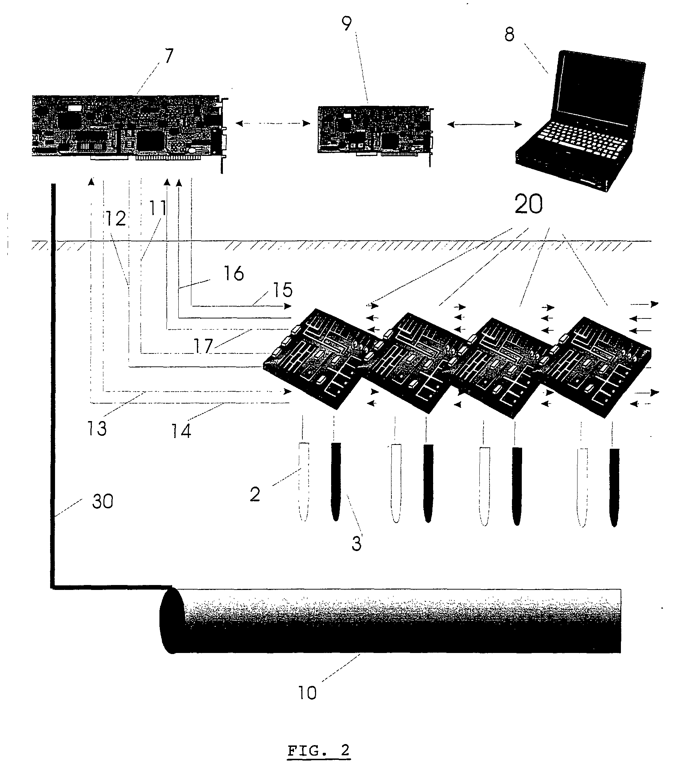

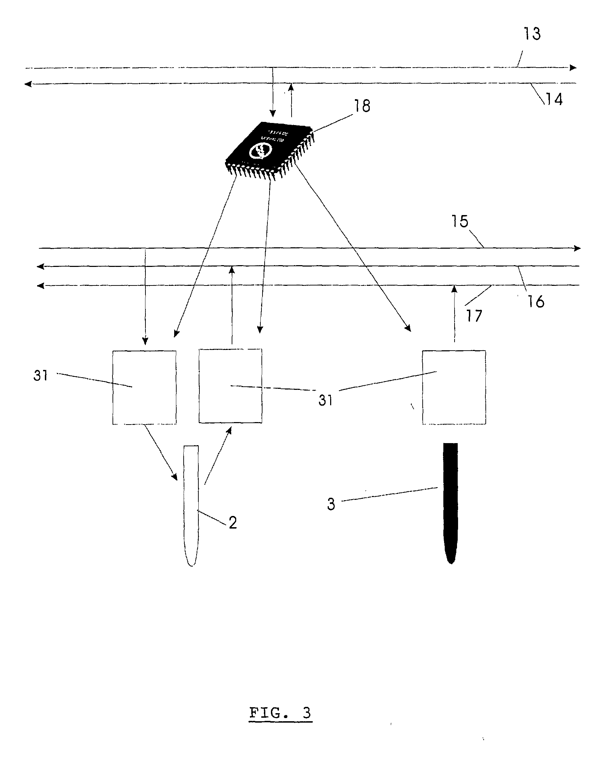

Figure 2 describes the connections and the function of the wires in the bus 6. The first two wires 11, 12 power the different processors of ASD's 20 at every location. The third and the fourth wire 13, 14 propagate the signals that address the ASD processors at each location which in turn activate the current and the measuring electrodes. The function of the other cables is explained on the basis of figure 3.

Figure 3 describes the working principle of the ASD's. Three measuring bus wires are present. Each current electrode can be connected by the switching action, governed by a micro-controller 18, to one of two wires 15,16. The switching components 31 selected are new generation of solid state relays. Other devices could be used to achieve this, such as transistors, thyristors, fets, read relays or others. The measurement electrode can be connected to the third wire 17. This possibility allows to achieve not only a measurement with the activation of one sensor at one location but also to achieve differential measurements between two sensors. A current can be generated between two current electrodes or a voltage difference measured between two measuring sensors.

The current electrodes and the measuring electrodes can be activated independently or together, depending on the measurements to be achieved, at each measuring point by the ASD.

The control system 4 is divided into three parts (figure 1) : the measurement board 7, the interface board 9 and the embedded controller 8. The measurement board comprises an AC and/or DC generator to inject a current into the soil, with a variable amplitude and frequency in the case of AC. Furthermore, the measurement board allows the configuration of any measurement by connecting or disconnecting current and measuring electrodes in any desired combination. Equally, the measurement board can measure analogue signals and convert them to digital values. A ranging is also possible.

The interface board 9 is the link between the measurement board 7 and the embedded controller 8. The interface board comprises a microcontroller, which is able to translate all of the interfaces and protocols, to the correct digital signals for the measurement board. The interface also generates the communication signals for the ASD's. Also, replies or measurements from the measurement board can be sent to the embedded controller 8.

This embedded controller 8 finally is the core of intelligence and automation of the system. It is in most cases a computer, on which software is running, designed to translate each measurement application into procedure/protocol, while equally interpreting the results of the measurement and sending each step of said protocol to the measurement board. The software enables the operator to choose the kind of measurement, to execute the measurement and to manage the data-acquisition, its interpretation and its visualization.

As was indicated above, the interface board is designed to understand any existing computer interface (such as RS232 or serial ports, RS485, USB, ISA, PCI, etc) and protocol (e.g. CAN, MOD, LON, etc.). The measurement can be conducted by a telemonitoring system, e.g. by connecting the embedded system to Internet by an Ethernet or token ring network, or with a modem, connected to a phone, cellular phone or wireless. This way, the system may be operated by any computer connected via Internet to the embedded controller. Another example of such a telemonitoring system is a PLC system.

In case the cable is put on the ground in order to do a one-time measurement of the state of corrosion, a portable measuring station is used in stead of a telemonitoring system.

The measuring electrodes and the current electrodes have a small surface. To insure a good electrical contact with the ground, especially in dry environments, the cable is supplied in a fabric containing a hydrophile powder at every measurement location. During the cable installation the product passes through a water container. The hydrophile powder swells and fills the total fabric volume, thus ensuring the electrical contact between the small sensors and the ground during the cable's lifespan after the cable is installed. In stead of this hydrophile powder, a drainage system may be placed next to the cable 1.

The materials for the measuring electrodes and current electrodes are selected in a way that they must remain stable during the measurement time. The material for the current electrodes is preferably a noble material having an elevated surface potential and a low corrosion rate given the fact that high current densities must be discharged during many years through a small electrode surface. Materials like carbon or graphite, Silicon cast Iron, high Silicon Chromium cast Iron or lead-silver alloys are suitable. These materials have a corrosion rate in the order of magnitude of kg/Ampere year. Materials like magnetite or ferrite are even more suitable (corrosion rate in the order of g/Ampere year). Most suitable are the materials like Titanium or Niobium, coated with platinum, or the oxides of titanium known as Mix Metal Oxide (MMO) because of their very low corrosion rate (order of mg/Ampere year). The last material (MMO) is preferred for the current electrodes given its large use as anode, and the optimum cost/functionality ratio.

The reference electrode, as its name states, must indicate a value that is stable and exact in time. This is not always necessary for most of the relative measurements, but for the absolute measurements of the potential it is. This problem is well known by electrochemists. Most types of reference electrode contain an electrolyte. Because of a pressure difference between the external electrolyte (in this case the soil) and the electrolyte inside the reference electrode, there will be a diffusion of one electrolyte towards the other. When the soil electrolyte diffuses into the electrolyte of the reference electrode, the latter will become poisoned. In the opposite case, when the electrolyte of the reference electrode diffuses into the soil, the reference electrode will lose its content and will stop functioning. In both cases the reference electrode will lose its stability as well as its exactness in the course of time. In recent years solid state reference electrodes have been developed, such as $Cu/CuSO_4$ or $Ag/AgCl$, which are available on the market. This kind of electrode has a lifetime in soil that, according to their manufacturers, approaches infinity, meaning that their lifetime is comparable with the lifetime of the buried structure.

Even with this type of reference electrodes, doubts remain about their long term stability, so their use may still be problematic when the risk of failure needs to be minimized. In the present invention, only one commercially available permanent solid state reference electrode is installed at the circuit beginning, in such a way that it can be replaced easily if problems of stability are identified. It can be tested with a portable reference electrode once a year for example. This reference electrode will serve as absolute reference for all electrodes used as measuring sensor along the cable.

The material used as measuring electrode will be simply steel or another metal. Steel is the ideal material to perform corrosion rate measurements but also IR free potential measurements on steel structures (potential measurements in the presence of interference/stray currents or cathodic protection currents). Of course, other materials could be used for the measuring electrodes, such as ceramics or composites.

**<u>Examples of modes of operation of the measurement system according to the invention.</u>**

<u>1. Applications directly related to corrosion</u>

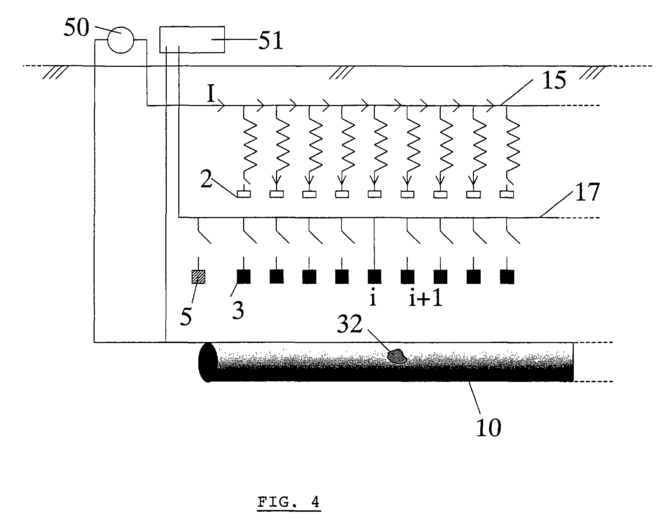

1.a <u>Detection of coating defects and determination of their size. (Figure 4)</u>

This type of measurement uses the possibility of differential measurement of the system according to the invention. By way of a DC or AC source 50, a direct or alternating current I is impressed on a certain section of the structure by several current electrodes 2. The amount of current electrodes that need to be activated depends on the distance between the structure 10 and the measuring cable. Typically for this kind of measurement all the current electrodes could be activated together. The aim is to obtain a homogenous distribution of the current.

In the case of the potential measurement, the measuring electrodes are activated in pairs, to obtain a differential measurement. This is done by activating both electrodes of said pair consecutively and recording the difference in the measured potentials, measured by the voltage measurement device 51. Every combination of potential measurements between any pair of measuring electrodes can be realized, so that potential measurements can be done over different distances between the electrodes. From the sign of the potential differences (in the case of direct current) that are obtained by gradually decreasing the distance between both electrodes and measuring each time the potential, the exact location of the coating defects 32 is determined. The absolute values of the potentials as well as the values of the currents (direct or alternating) give also an idea of the relative dimensions of the coating defects. Figure 4 shows the principle of the differential measurement between two electrodes i and i+1 that are next to each another.

1.b <u>Measurement of the local and average resistance of the coating along the structure.</u>

<u>Measurement of the average resistance of the coating</u>

The general principle can be explained based on the same figure 4. Depending on the distance between the cable and the structure, a given number of current electrodes 2 is activated.

An alternating current is generated by a certain number of adjacent current electrodes. At each location where current is generated, the potentials between the measuring cable and the structure are measured one after the other by the measuring electrode at that location. The potentials are measured in a section where the current is homogeneously distributed on the structure. The measurement is done with an alternating current at a well-defined frequency to avoid polarization of the metal structure. A low frequency from about 10 Hz until 1 kHz will do. This frequency is chosen so that it is <u>not</u> a multiple of the frequency of the network, in order to avoid interference problems (50 Hz for Europe, 60 Hz for US). The average coating resistance of a section of the structure ($R_{coating}$) is given by the average value of the potential ($V_i$, i = 1 to n) measured on that section divided by the total current ($I_{AC}$) generated by the current electrodes:

$$R_{coating} = \frac{\sum_{i=1}^{i=n} V_i}{n I_{AC}} \qquad (eq.\ 1)$$

Multiplying this value by the surface that is influenced by the current, gives the specific resistance of the coating. This measurement makes it possible to determine the average quality of the coating over a certain length. If the type of coating (paint, bitumen, polyethylene,...) and its approximate thickness are known, the amount of bare steel in contact with the soil can be calculated quite precisely based on the average resistivity of the ground measured on the same section (see section 1.d below), especially when these values are recorded and compared in time.

A second estimation of bare steel percentage more accurate than the previous calculation is obtained by a comparative experiment that the system can perform. The steel measuring electrodes on the same section are connected temporarily to the steel structure at the beginning of the cable. The total current flowing to the steel electrodes ($I_{electrode}$) when current electrodes are activated is also measured at the circuit beginning. The amount of bare steel ($S_{bare\ steel}$) can be estimated by the ratio :

$$S_{bare\ steel}\ (m^2) = \text{surface electrode} \times \frac{I_{structure}}{I_{electrode}} \qquad (eq.\ 2)$$

In equation (2), 'surface electrode' is the known area of different measuring electrodes activated and connected to the structure in $m^2$.

The bare steel percentage is therefore the ratio of (eq. 2) to the total structure surface ($S_{total}$) influenced by the current discharged by the measuring cable :

$$\text{Bare steel percentage (\%)} = 100\ \frac{S_{bs}}{S_{total}}$$

<u>Measurement of the local resistance of the coating</u>

The local coating resistance can be determined in the same way as the average resistance described in the previous paragraph. In this case only one current electrode i and one measuring electrode are activated at the same time on each location. The local coating resistance can be compared to the average value of the coating resistance with the differential measurement described in the previous section. The local amount of bare steel can also be determined as a function of time by the two ways described above.

1.c <u>Determination of local corrosion rates</u>

The measurement of the corrosion rate provides vital information about the condition of buried metal structures. This corrosion rate depends on the corrosion current on the structure's surface, which is in turn determined by the anodic and cathodic corrosion processes which are taking place here. Methods have been described in the prior art to obtain this corrosion current by way of the so called polarization resistance, which is related to said corrosion current.

The Linear Polarization Resistance or LPR measurement is a known method, which is based on the observation that if the percentage of bare steel in contact with a surrounding electrolyte is known, the corrosion rate of the metal can be determined by measuring the voltage-current characteristic of the steel in a narrow potential window around the corrosion potential (between - 10 mV and + 10 mV). In this narrow potential window, the V-I characteristic is linear and the polarization resistance, which is equivalent to the slope of said V-I characteristic can be determined. In turn, this polarization resistance is inversely proportional to the corrosion current. With the percentage of bare steel known, the lifetime of a structure can then be calculated and extrapolated continuously in time, from the results of a voltage sweep. The measurement system for the potential must be equipped with a current interrupter in order to avoid measuring the error of the potential drop caused by the current flowing through the electrolyte from the current electrode to the structure.

A drawback of these LPR measurements is the fact that they have little chance of being achieved over long distances in soil, due to the small signal and the electrical noise.

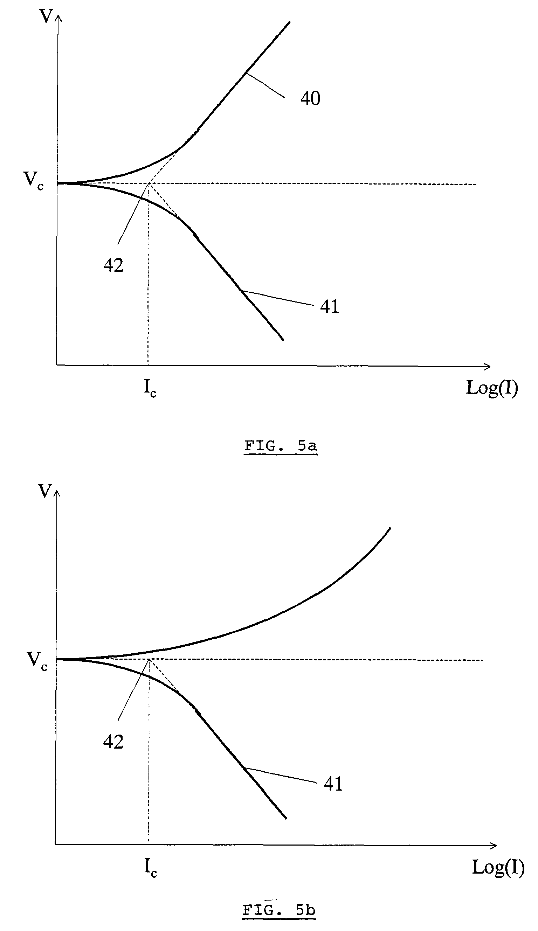

Another technique offers a direct determination of the corrosion current. This is illustrated in figure 5a. When measuring the voltage between the test structure and a reference electrode as a function of current in the case of an anodic 40 and a cathodic 41 current, one finds that the slope of V as a function of log(I) becomes linear for increasing currents, thus defining the so called 'Tafel' slopes for anodic and cathodic currents respectively. It is known that the intersection 42 between these two slopes results in the exact corrosion current $I_c$, which, like the polarization resistance, allows to calculate the corrosion rate.

Measuring the Tafel slopes in the high current limit presents a problem when applied in a soil, because the characteristic for an anodic current does not have a linear slope in the V-log(I) diagram. Tests performed with the system according to the present invention confirm however that the intersection of the cathodic Tafel slope only, with the corrosion potential $V_c$ (see figure 5b) determines the corrosion current and therefore, in another way, the corrosion rate.

Table 1 provides measured corrosion rates in a test set-up for determination of the corrosion rate of 1 cm$^2$ of bare steel, using clay as an electrolyte, a sweep of 1mV/s for the measurement of polarization resistance, and a Cu/CuSO$_4$ reference electrode. Within acceptable error margins, the corrosion rates determined by both approaches, are comparable.

The measurement of the cathodic Tafel slope is less sensitive to noise due to the higher current and the higher potentials and gives the same result than the LPR measurements carried out in the small current-voltage limit.

The difference between the potential measured in the presence of a current and the potential measured in the absence of a current allows also to determine the resistance of the soil between the structure and the reference electrode because the current is known. This value shall make it possible to correct, for instance, the values of the coating resistance measured in the preceding points and carried out without current interruption.

1.d <u>Measurement of the soil resistivity</u>

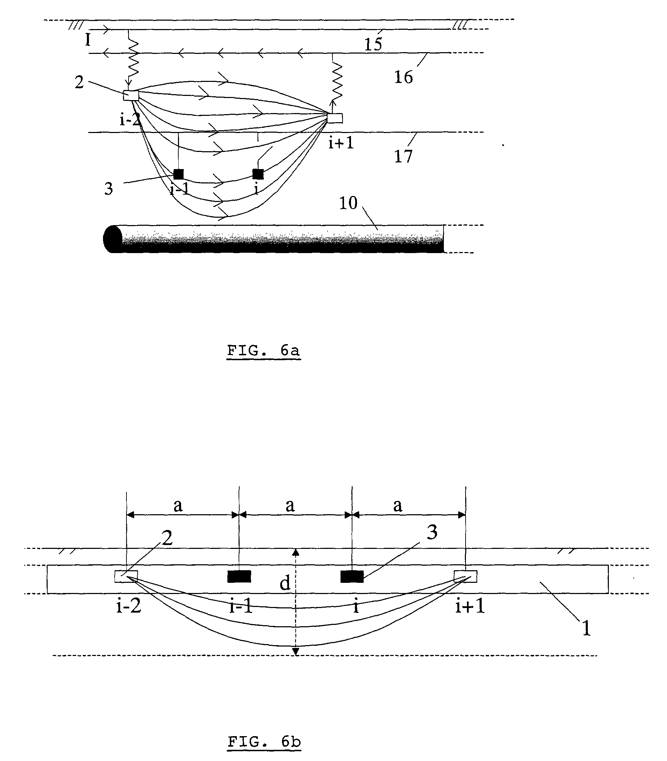

One of the most important variables to determine the corrosivity of a buried metal structure, is the resistivity of the soil. It is necessary for example for the first of the two ways of determining the bare steel percentage in paragraph 1.b. To measure the resistivity, a current (alternating or direct) is generated between two current electrodes and the potential difference is measured between two measuring electrodes, situated in between the current electrodes. Figures 6a and 6b show the measuring principle for 4 adjacent electrodes.

In order to measure the soil resistance between the measuring electrodes i-1 and i, a current is impressed between the respective current electrodes i-2 and i+1 and the difference of potential is measured between the measuring electrodes i-1 and i. The ratio of the difference in potential with respect to the current gives the electrical resistance of the section of the soil between the electrodes i-1 and i. The resistivity of the ground can easily be calculated from the measured value of the resistance and the known distance between the electrodes. This measurement can be done for each location i = 1 to n. This four-point resistivity measurement is independent from the electrical contact resistance between the electrodes and the ground.

The resistance measured in this way is representative for a certain depth of soil. In case the electrodes are relatively close to the surface, as in figure 6b, one can calculate that, 50 % of the current lines flow in a depth (d) corresponding to the spacing between the pickets (a). That means that the resistance measured is equivalent to the resistivity ρ of the ground for a depth (d) corresponding to a distance (a) between the electrodes:

$$\rho \ (\Omega m) = 2\pi \ a \ (m) \ R \ (\Omega) \text{ for } a \approx d \qquad\qquad \text{(eq. 3)}$$

In other words, by changing the distance between electrodes, the system of the invention allows to measure, above ground, the apparent resistivity for different soil depths.

By automating the measurements for the different combinations of spacing between the electrodes, the soil resistivity at each point for different depths can be determined.

The four-point measurement is a measurement that is independent from the contact resistance between the electrodes and the soil. It is possible to do the same measurements with two points. In the case of figure 6, for example, this is done if the current and potential differences are respectively generated and measured at the locations i-1 and i. The measurement of the soil resistance with two points contains an error corresponding with the sum of the contact resistances between the electrodes and the ground. By subtracting the resistance measured with four points from the resistance measured with two points, a method is obtained to test the quality of the electrodes and their electrical contact with the soil. This makes it possible to test the functioning of the electrodes by means of the electrodes themselves.

1.e Measurement of corrosion potentials in the absence or presence of interference currents

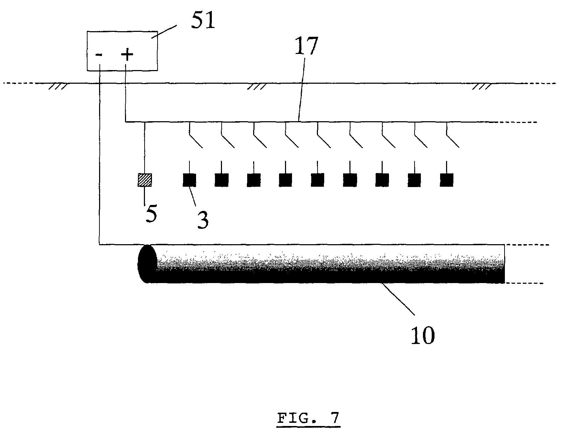

Figure 7 shows a schematic view of the measuring principle. At every location the measuring electrodes 3 are separately activated one after the other. Figure 7 shows the activation of the reference electrode 5 and the measurement of the potential at this location. The potential measured by the reference electrode 5 is the average corrosion potential of the surface of the structure at that location. As discussed, in the present invention, the potential reading of the metal measuring electrodes is calibrated with said permanent reference electrode buried at the beginning of the circuit and used as absolute potential reference.

The measuring of the potential provides already a large amount of information because its value gives not only a very precise idea of the relative corrosion state of the structure at that location but also allows to determine the presence of unwanted and dangerous interference currents or "stray currents", caused by abnormally elevated potentials with rapid destruction of the structure as a consequence.

This technique functions perfectly in absence of interference currents flowing to the structure. These currents can not be interrupted and can add a substantial error to the potential readings, because of the voltage drop due to this current that can not be interrupted. That's why an additional measurement or 'coupon technique' is carried out. At each location the metal measuring electrode is temporarily connected to the structure. If a non-zero current is measured, the structure is influenced by an interference or cathodic protection current that can not be interrupted. The measurement of this current gives also a measure of the current density, given that the surface of the electrode is known. In this case the current electrodes (MMO) will be used as relative measuring electrodes. The connection between the measuring electrode and the structure is interrupted and the potential of the measuring electrode measured with the MMO current electrode. This measurement provides an "IR free" potential measurement.

1.f Measurement of the level of protection provided by a cathodic protection installation and adjustment of the protection level in the absence or presence of interference currents

When a cathodic or anodic protection system is already installed on the structure, the measurement system according to the present invention allows the measurement at every location of the level of protection offered by said protection system. To achieve this, the cable is provided with a signal that synchronizes the measurement with the current interrupter of the rectifier of the cathodic or anodic protection system. The potential between the structure and the measuring electrode is registered at every current interruption of the cathodic or anodic protection system. This potential measured in the absence of the protective current is nothing else than the polarization or protection potential of the metal surface at that point. For a steel construction this value must be situated in a window of 0.35 V. Indeed when the potential is for instance measured with a $Cu/CuSO_4$ reference electrode, a value more positive than -0.85 V indicates that the steel is not sufficiently protected against corrosion (under protection, the structure is still corroding). A value lower then -1.1 V indicates the generation of hydrogen gas with the risk of damaging not only the structure itself but also the coating. The installation that is expected to protect the structure will therefore damage it in stead of protecting it (limit of over-protection).

By means of a feedback system, the system can also adjust the current impressed by the rectifier of the cathodic protection installation in order to stay in the protection window at every location and to achieve an optimal protection at every moment.

Again the presence of unwanted interference currents can completely disturb this measurement. The same coupon technique than the one described in the previous section will be applied to determine the influence of stray currents.

1.g Use of the corrosion monitoring system as intelligent anode.

One of the most important possible applications of the present invention is its use as intelligent long-line anode. For all previous measurement applications, the sensors are activated at each measuring event (once or twice a day). A DC current could be applied continuously by the measuring cable as a function of time. The positive terminal of the DC power supply at the beginning of the circuit is connected to all current sensors. The negative terminal of the power supply is connected to the structure to be protected and/or to be monitored. In this application all current sensors are activated at the same time. The DC current applied on the structure protects the buried structure between two measuring events. In this way, the system of the invention provides the cathodic protection current required to protect the buried structure, and at the same time the measurement of the state of the protection is performed with the previously described techniques.

1.h Other corrosion measurements that can be done with the same product

Apart from the many parameters obtainable by the applications described in sections 1.a to 1.g, or by combinations of said applications, it is also possible to use other measuring techniques that are not explicitly described in this text. For example, the frequency of the source of alternating current is programmable and can be changed. It is therefore possible to realize a complete frequency response analysis in a frequency range going from DC to 10 kHz.

**2. Applications of the measurement system not related to corrosion**

Several other applications not related to corrosion have already been identified and tried out with the system according to the present invention. These applications can be directly applied with exactly the same measuring method and the same sensors. No adjustments or changes have to be made to the system described in the previous paragraphs.

2.a. Localization of hydrocarbon contamination in the ground

The sanitation of soils polluted with hydrocarbons has become a major concern in many countries and has therefore become an important and growing field of activity. Soil sanitation in itself is already a very expensive operation. In addition, the localization and the determination of the extent of the pollution are equally time consuming activities. Drilling and taking samples isn't always possible because the soil is not always accessible. Storage tanks and pipelines for instance are very often buried next to other constructions under concrete and congestionned areas (cities, refineries, chemical plants...).

Hydrocarbons have the particularity to be very bad electrical conductors, due to their high specific resistivity. They do not mix with water and therefore condense above the water table. Using the continuous monitoring system according to the present invention, it is possible to continuously measure the resistivity with the four-point method described above, and thereby not only detect the probability of the presence of these pollutions, by detecting abnormalities in the resistivity measurements, but also localize the spot and determine the extent of the polluted area.

For this application the automatic resistivity measurement system is made mobile in a way that a continuous scanning can be made in the direction of movement. The same automatic measurement system impresses a current and measures the potential differences corresponding with the different combinations of spacing between electrodes. The system could be used to determine other types of abnormalities of low conductance in the ground, like cavities.

The measurement system makes use of the same four point measuring technique described in the corrosion monitoring application section to measure contact free electrical resistances. As shown in figures 6a and 6b, an AC-current at a fixed frequency is discharged between two current electrodes 2 and a difference of potential is measured between two measuring electrodes 3. The ratio of the measured voltage to the measured current, multiplied by a geometrical factor, results in the above ground apparent resistivity of the soil between the two center electrodes. The distance between two of the four consecutive electrodes is taken to be a fixed distance (a), in a so-called Wenner array technique. The current electrodes are used to provide contact with the ground. As was described above, 50 % of the current lines flow in a depth (d) corresponding to the spacing (a) between the electrodes. That means that the resistance measured is equivalent to the resistivity of the ground for a depth corresponding to a distance between the electrodes:

$$\rho \ (\Omega m) = 2\pi \ a \ (m) \ R \ (\Omega) \text{ for } a \approx d \qquad\qquad (\text{eq. 3})$$

In other words, by changing the distance between electrodes, it is possible to measure, above ground, the apparent resistivity for different soil depths. In normal grounds, the apparent resistivity goes down with the spacing. It is due to the moisture diffusing to the water table that increases exist in the ground moisture concentration as a function of the depth. Of course, this is more obvious for a sandy soil, which is granular, not dense and permeable, than for a clay ground where the moisture content will remain more constant as a function of depth (plastic, adhesive and little permeable). If the resistivity for the largest spacing ($\rho(s)$) is normalized with respect to the resistivity found at the surface ($\rho(o)$), a ratio smaller than 1 should be the result :

$$\frac{\rho(s)}{\rho(0)} < 1 \qquad\qquad (eq.\ 4)$$

In a ground where a resistive layer is present at a certain depth, the apparent soil resistivity goes up with the spacing and the normalized ratio of equation 4 will become bigger than 1.
The ratio of equation 4 is compared to a model that computes the depth of the resistive layer for every location scanned above ground.

2.b Irrigation of cultures

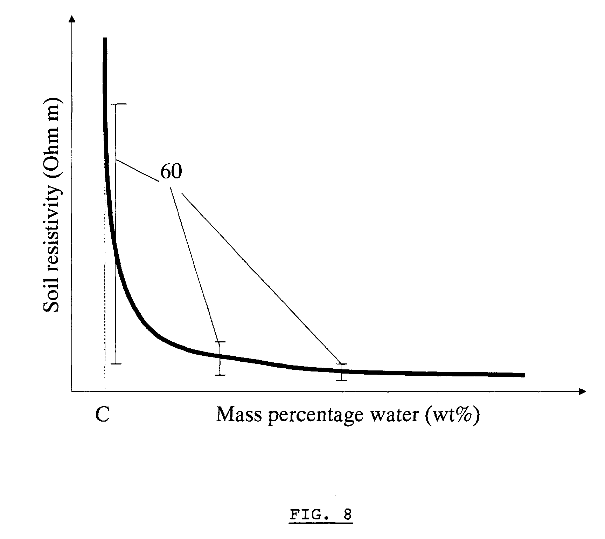

An example of this application can be found in California and other desert regions. The extensive cultivation in these regions is very sensitive to the irrigation conditions at long distances. Therefore there is a need for a continuous measurement system that can determine the humidity of the soil everywhere.
A feedback system may adjust the moisture content of the soil at every location. This application is very similar to the one described above to adjust the cathodic protection current impressed on a metallic structure.
In the concept of the corrosion measurement, the system can measure the resistivity of the soil with the four-point measuring technique. The resistivity of the soil is a function of the moisture content.
By measuring the resistivity and the error on that measurement, the need for irrigation can be very precisely determined.
On a typical curve of soil resistivity as a function of its moisture content (see figure 8), it can be seen that beneath a critical value C of the moisture content, the resistivity rises abruptly. This kind of behaviour is typical for so-called "percolation" phenomena. The conductivity is a function of the type and the number of the ionic charge carriers in the soil.
Above that critical value, the percolation limit, with large quantities of moisture present, there are many paths for the current to flow through. With these moisture contents the resistivity does not depend upon the scale on which it is measured. In other words, the statistical error margin 60 on the resistivity value will be low.
Beneath that limit, the number of conductive paths becomes less and the resistivity starts to depend upon the scale on which it is measured. In other words the resistivity becomes highly dependent on the place where it is measured. As the value of the resistivity rises, the statistical error on it becomes larger as well, because of these inhomogeneities. At certain locations there is still enough moisture and both the resistivity and the error on it remain low. At other locations the moisture content is low and the corresponding resistivity and error very high.
Given the fact that a collection of local values are measured and analyzed, the statistical error on the value of the resistivity can easily be calculated with the system according to the invention.
The measurement of the error on the resistivity provides an irrigation criterion. The computer measures and saves the values of the resistivity along the field and calculates the average value and the standard deviation. Depending upon the kind of plantation and the sensitivity of the cultivation to the water content, a certain value will be set as irrigation criterion.

2.c In situ rehabilitation of the coating of a buried metallic structure

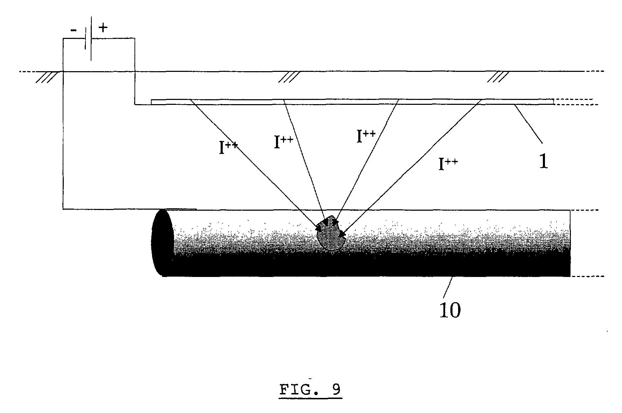

One of the most important potential applications of the system besides the application for corrosion is the in situ rehabilitation of damaged coatings of buried structures. The measuring cable 1 of the invention can generate a current during a limited time and therefore be used as a temporary anode or cathode. In order to have corrosion there should be a metal, an electrolyte and the possibility to have a current, so that a closed electric circuit is obtained.
During the measurements, the cable impresses a continuous current on the structure. In the soil, the current consists of free salts. When the cable is put at a potential that is more positive than the one of the structure, the positive ions of the soil will migrate towards the structure and the negative ions towards the cable (see figure 9). When the cable is at a lower potential than the structure the migration of the ions will be in the opposite direction: negative towards the structure and positive towards the cable.
It is very well known in the world of cathodic protection that the current necessary to protect a buried metallic structure becomes smaller as a function of time. This is due to two phenomena : the change of chemical composition of the soil surrounding the structure caused by the electrochemical reactions (change of pH, etc.) and an electrolytic deposition on the metal surface. Said change of chemical composition causes positive ions, e.g. calcium ions in the soil to precipitate towards the metal structure. Said deposition, e.g. of calcium atoms, is caused by a reaction of said ions with electrons from the metal structure : $I^{++} +2e^- \rightarrow I$. These precipitations or depositions form a natural layer comparable to a coating. The quantity of bare steel diminishes, so that the current necessary to protect the structure becomes less.

The quantities and the form of the depositions depend upon the type of soil and of its moisture content, two variables that are difficult to control. However, the control of these parameters should only be necessary for a short period of time if the type of ion and its quantity are known. One way to achieve this is by sprinkling the top of the structure with a considerable quantity of electrolyte containing the right ions. Another possibility would be to pack the adequate ions in advance in the cable (before it is put into the ground). In the latter case, only water should be added to the soil between the structure and the cable.

The ions brought into the soil can migrate through the soil because of the electric field generated by the cable and can make a deposition at the potential required to have a controlled electrolysis. The reference electrode and the measuring electrodes of the system according to the present invention allow the measurement of the potential and the control of the electrolytic current at every location.

2.d <u>Controlled sanitation of soils polluted by heavy metals</u>

The technique of decontamination of soils containing heavy metals by means of electrophoresis (by generating an electrical field in the soil) is not new. However, the system according to the invention allows the application of this technique in a controlled way and with an ideal geometry.

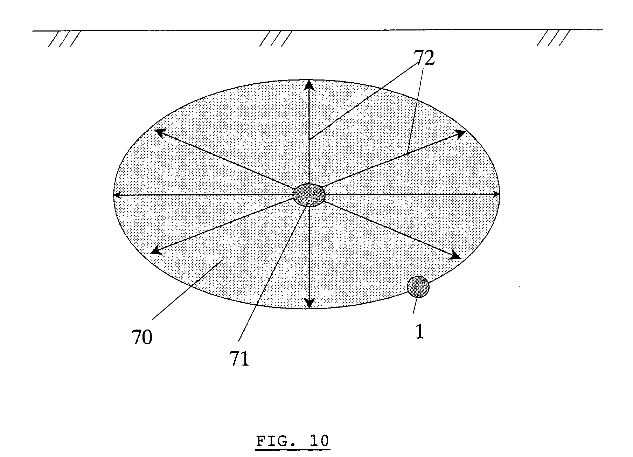

As was described in the previous paragraph, the cable of the system can be used as a temporary anode or cathode. As shown in figure 10, the cable 1 of the invention must be placed around the section 70 that must be decontaminated. The current electrodes are connected to the negative of the automatic rectifier (not shown). A conventional anode 71 is placed in the centre of the polluted area and is connected to the positive of that same rectifier.

The advantage of using the cable as a cathode as described above, is that the material of the current electrodes is not consumed in time. No additional development needs to be done to ensure the lifetime of the sensors required for this application. Moreover, the radial geometry is the most suitable : the radial resistance of the current lines 72 is minimal. The heavy metallic ions will migrate towards the measuring cable even if a small tension is generated.

In this case, the measuring electrodes of the system are used to control the technique of reclaiming the heavy metals in time by means of potential measurements. For instance, in case of a too large accumulation of the charges at the cathode, the automatic system can reverse the tension automatically during a certain time in order to optimize the process.

Table 1 :

| Corrosion rates measured by polarization resistance and cathodic Tafel slope | | |
|---|---|---|
| | Corrosion rate (mm/year) using polarization resistance | Corrosion rate (mm/year) using cathodic Tafel slope |
| Sample 1 | 0.018 | 0.012 |
| Sample 2 | 0.049 | 0.031 |

**Claims**

1. A measuring system for the measurement of the corrosion of a buried metallic structure, **characterised in that** said measuring system allows said corrosion measurement simultaneously and continuously in time on several locations of said buried structure.

2. The measurement system according to claim 1, said system comprising :

   - a measuring cable (1) comprising several current electrodes (2) and several measuring electrodes (3), several addressable switching devices (20) and an electrical bus (6),
   - a reference electrode (5),
   - a control system (4), comprising an embedded controller (8), an interface board (9) and a measurement board (7), wherein said measurement board (7) comprises an AC and/or DC voltage generator (50) and a voltage measurement device (51).

3. The measurement system according to claim 2, wherein said electrodes are arranged in pairs of one current electrode (2) and one measuring electrode (3) along the length of said cable, each pair being located on a different location along said cable (1), so that all of said electrodes are in contact with the surrounding soil, and wherein one reference electrode (5) is situated at the beginning of said cable (1) , and wherein one addressable switching device (20) is present at each of said locations, said addressable switching device controlling the connection of said current electrodes to said voltage generator (50), and said addressable switching device equally controlling the connection of said measuring electrodes to said voltage measurement device (51).

4. The measurement system according to claim 2, wherein said electrical bus (6) comprises a connection (12) to a zero volt reference, a voltage supply (11) for the addressable switching devices, a transmit line (13) for the addressable switching devices, a receive line (14) for the addressable switching devices, two conducting wires (15,16) used to supply or drain a current to or from said current electrodes, and one conducting wire (17) used to measure a voltage between said buried structure and said measuring electrodes.

5. The measurement system according to claim 4, wherein said addressable switching device is controlling the connection of said current electrode (2) to one of said first two conducting wires (15,16), and said addressable switching device is equally controlling the connection of said measuring electrode (3) to said conducting wire (17).

6. The measurement system according to one of claims 2 to 5, wherein said addressable switching devices comprise switching components (31) selected from the group consisting of solid state relays, transistors, thyristors, fets and read relays.

7. The measuring system according to one of claims 2 to 6, wherein said embedded controller is a computer.

8. The measurement system according to one of claims 2 to 7, wherein said current electrodes (2) are made of a material having a low corrosion rate.

9. The measurement system according to claim 8, wherein said current electrodes (2) are made of a Mix Metal Oxide (MMO).

10. The measurement system according to one of claims 2 to 9, wherein said measuring electrodes (3) are made of a metal, preferably steel.

11. The measurement system according to one of claims 2 to 10, wherein said reference electrode (5) is a solid state reference electrode.

12. The measurement system according to one of claims 2 to 11 wherein said cable (1) is supplied in a fabric containing at every sensor location a hydrophile powder.

13. The measurement system according to one of claims 2 to 12 wherein all the electrodes may be switched on or off independently by said control system.

14. Use of the measurement system according to claim 1 to localize coating defects of a coated buried metallic structure.

15. Use of the measurement system according to one of claims 1 to 14 to measure an average resistance of a coating of a buried structure.

16. Use of the measurement system according to one of claims 1 to 14 to measure a local resistance of a coating of a buried structure.

17. Use of the measurement system according to one of claims 1 to 14 to measure a local corrosion rate of a buried structure.

18. Use of the measurement system according to one of claims 1 to 14 to measure a soil resistivity.

19. Use of the measurement system according to one of claims 1 to 14 to measure corrosion potentials in the absence or presence of interference currents.

20. Use of the measurement system according to one of claims 1 to 14 to measure a level of protection provided by a cathodic protection installation.

21. Use according to claim 20, of the measurement system according to one of claims 1 to 14 to adjust said protection level in the absence or presence of interference currents.

22. Use of the measurement system according to one of claims 1 to 14 as an intelligent anode.

23. Use of the measurement system according to one of claims 1 to 14 to localize hydrocarbon contamination in the ground.

24. Use of the measurement system according to one of claims 1 to 14 to continuously measure the humidity of a soil.

25. Use of the measurement system according to one of claims 1 to 14 for rehabilitating a coating of buried structures.

26. Use of the measurement system according to one of claims 1 to 14 for a controlled sanitation of soils polluted by heavy metals.

FIG. 1

FIG. 2

FIG. 3

FIG. 4

FIG. 5a

FIG. 5b

FIG. 6a

FIG. 6b

FIG. 7

FIG. 8

FIG. 9

FIG. 10

EP 1 152 235 A1

**European Patent Office**

Application Number

EP 00 87 0093

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| Y | US 5 126 654 A (MURPHY JOHN C ET AL) 30 June 1992 (1992-06-30) * abstract; figure 2A * | 1,14 | G01N17/02 |
| Y | EP 0 170 929 A (ORONZIO DE NORA SA) 12 February 1986 (1986-02-12) * abstract; figure 1 * | 1,14 | |
| A | DE 37 16 846 A (PRAKLA SEISMOS AG) 24 November 1988 (1988-11-24) * abstract; figure 1 * | 1 | |
| A | FR 2 694 333 A (TECHSOL) 4 February 1994 (1994-02-04) * abstract * | 1 | |
| A | EP 0 354 096 A (FRANCE ETAT ;ADVANCED TECHNOLOGIES INDUSTRY (FR)) 7 February 1990 (1990-02-07) * figure 4 * | 1 | |

TECHNICAL FIELDS SEARCHED (Int.Cl.7)

G01N

The present search report has been drawn up for all claims

| Place of search | Date of completion of the search | Examiner |
|---|---|---|
| THE HAGUE | 9 November 2000 | Duchatellier, M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**          EP 00 87 0093

This annex lists the patent family members relating to the patent documents cited in the above-mentioned European search report.
The members are as contained in the European Patent Office EDP file on
The European Patent Office is in no way liable for these particulars which are merely given for the purpose of information.

09-11-2000

| Patent document cited in search report | | Publication date | Patent family member(s) | | Publication date |
|---|---|---|---|---|---|
| US 5126654 | A | 30-06-1992 | NONE | | |
| EP 0170929 | A | 12-02-1986 | IT | 1196187 B | 10-11-1988 |
| | | | AU | 4475385 A | 16-01-1986 |
| | | | DE | 3578837 D | 30-08-1990 |
| | | | JP | 61096091 A | 14-05-1986 |
| DE 3716846 | A | 24-11-1988 | NONE | | |
| FR 2694333 | A | 04-02-1994 | AT | 159822 T | 15-11-1997 |
| | | | AT | 196691 T | 15-10-2000 |
| | | | DE | 69314871 D | 04-12-1997 |
| | | | DE | 69314871 T | 04-06-1998 |
| | | | DE | 69329505 D | 02-11-2000 |
| | | | EP | 0581686 A | 02-02-1994 |
| | | | EP | 0786673 A | 30-07-1997 |
| | | | ES | 2111142 T | 01-03-1998 |
| EP 0354096 | A | 07-02-1990 | FR | 2634887 A | 02-02-1990 |
| | | | JP | 2243951 A | 28-09-1990 |